# EUROPÄISCHE PATENTSCHRIFT

(11) **EP 0 372 498 B1**
(45) Veröffentlichungstag und Bekanntmachung des Hinweises auf die Patenterteilung: **22.03.1995**
(21) Anmeldenummer: 89122420.6
(22) Anmeldetag: 05.12.1989
(51) Int. Cl.: F16H 3/74

(54) **Drehmoment-Übertragungsgetriebe**
Torque transfer gear box
Boîte de vitesse à transfert de couple

(30) Priorität: 09.12.1988 DE 3841508
(43) Veröffentlichungstag der Anmeldung: 13.06.1990
(73) Patentinhaber: Stuke, Walter, D-26169 Friesoythe (DE)
(72) Erfinder: Stuke, Walter, D-26169 Friesoythe (DE)
(74) Vertreter: Müller, Enno, Dipl.-Ing.

(56) Entgegenhaltungen:
- EP-A- 0 252 183
- DE-A- 2 318 299
- DE-A- 3 045 080
- FR-A- 2 126 513
- FR-E- 79 253
- US-A- 4 041 835
- H.W. Müller, "Die Umlaufgetriebe", Springer,Berlin 1971; S. 4,5
- J.Looman, "Zahnradgetriebe", Springer, Berlin 1970; S 12

## Beschreibung

Die Erfindung bezieht sich auf ein Drehmoment-Übertragungsgetriebe mit einer Antriebswelle, die über ein Planeten-/Sonnenradsystem das Antriebsmoment auf die Abtriebswelle überträgt. Getriebe mit einer "Verzahnungsrückkopplung" sind bekannt. Eine derartige Rückkopplung findet sich bei einem Wandlergetriebe gemäß der DE-A-23 18 299.

Aufgabe der vorliegenden Erfindung ist es, ein Drehmoment-Übertragungsgetriebe zu schaffen, welches sich dem vom Motor abgegebenen Drehmoment anpaßt, also ein von der Abtriebsseite her eingebrachtes Gegenmoment mit zu hohem Wert so beispielsweise nicht mehr zu einem sogenannten Abwürgen eines Motors führen kann; außerdem soll ein solches Getriebe in hohem Grade verlustarm arbeiten.

An einem gattungsgemäßen Drehmoment-Übertragungsgetriebe ist diese Aufgabe dadurch gelöst, daß über eine Verzahnungsrückkopplung ein an der mit der Antriebswelle umlaufenden Planetenrädern anstehendes Bremsmoment=Reaktionsmo ment zum stufenlosen Drehzahlausgleich zwischen An- und Abtriebswelle genutzt wird.

Über die Verzahnungsrückkopplung wird ein in sich geschlossenes Übertragungssystem erzielt, bei welchem das von der Abtriebsseite her wirkende Gegenmoment die Kraftübertragung bestimmt. Das Getriebe arbeitet dabei aber nur so lange, bis der Abtrieb sich wieder auf die Drehzahl der Antriebsseite eingestellt hat. Danach schaltet das Getriebe durch auf den direkten Weg, d.h. es arbeitet kein Zahnrad mehr im Getriebe. Entsprechend entstehen auch keine Getriebegeräusche, da die Zahnräder dann ja nicht kämmen. Hieraus resultieren geringer Verschleiß und Wartungsaufwand. An einem Drehmoment-Übertragungsgetriebe mit einer Antriebswelle, die über ein Hohlrad mittels zwischengeschalteten ersten Satzes Planetenrädern das Antriebsmoment auf ein Sonnenrad der Abtriebswelle überträgt, erweist es sich baulich als vorteilhaft, daß mit dem ersten Satz Planetenrädern ein zweiter Satz Planetenräder gekuppelt ist, der einerseits mit einem Sonnenrad der Abtriebswelle und anderseits mit einem als Hohlrad gestalteten Getriebemantel kämmt, und daß das Hohlrad mittels auf der Antriebswelle gelagerter Planetenräder eines dritten und vierten Satzes mit einem frei auf der Abtriebswelle gelagerten Sonnenrad in mittelbarem Zahneingriff steht. Der in die Verzahnungsrückkopplung einbezogene Getriebemantel bringt nicht nur den schützenden Umbau des Getriebeeingerichtes, sondern fungiert zugleich als kraftschlußübertragendes Mittel. Der mantelförmige Aufbau läßt sich bis hin zur rotationssymmetrischen Gestalt perfektionieren, so daß, baulich optimiert, diesen Bauteil sogar die Hohlradfunktion übertragen werden kann. Hinzu kommt, daß durch die Möglichkeit der Diametrallage der Planetenräder Unwucht vermieden wird. Weiter bringt die Erfindung in Vorschlag, daß der erste Satz Planetenräder aus mit einem Hohlrad kämmenden Außenrädern sowie dem Sonnenrad kämmenden Innenrädern be-steht. Vorteilhaft ist überdies weiter so vorgegangen, daß die Planetenräder des zweiten Satzes unmittelbar mit dem Sonnenrad der Abtriebswelle und dem Getriebemantel kämmen. Weiter ist so vorgegangen, daß der dritte Satz Planetenräder aus mit dem Hohlrad kämmenden Außenrädern sowie dem Sonnenrad kämmenden Innenrädern besteht. Der dritte Satz ist zweckmäßig ein Doppelsatz. Damit das Getriebe auch mit Motoren mit sehr hohen Antriebsdrehzahlen, deren Drehzahl also als Eingangsdrehzahl zu hoch ist, und bei verlangt hohen Antriebsmomenten benutzt werden kann, ist der Antriebsseite des Getriebes ein untersetzendes Vorschaltgetriebe zugeordnet.

Weitere Einzelheiten des Gegenstandes der Erfindung sind nachstehend anhand eines zeichnerisch veranschaulichten Ausführungsbeispieles näher erläutert. Es zeigt:
- Fig. 1: das erfindungsgemäße Drehmoment/Übertragungsgetriebe im Längsschnitt,
- Fig. 2: den Schnitt gemäß Linie II-II in Fig. 1, die Drehrichtungen und Reaktionen des vierten Satzes in der Arbeitsphase,
- Fig. 2a: einen Schnitt wie Fig. 2, jedoch die Drehrichtungen und Reaktionen des vierten Satzes im direkten Gang wiedergebend
- Fig. 3: den Schnitt gemäß Linie III-III in Fig. 1,
- Fig. 4: den Schnitt gemäß Linie IV-IV in Fig. 1 und
- Fig. 5: eine der Fig. 1 entsprechende Darstellung, jedoch mit antriebsseitig zugeordnetem Vorschaltgetriebe.

Das in den Stirnwänden 1 und 2 eines Ständers oder Gehäuses gelagerte Drehmoment-Übertragungsgetriebe (nachstehend als Getriebe G bezeichnet) ist rotationssymmetrischen Aufbaues mit horizontal angeordneter geometrischer Längsmittelachse x-x.

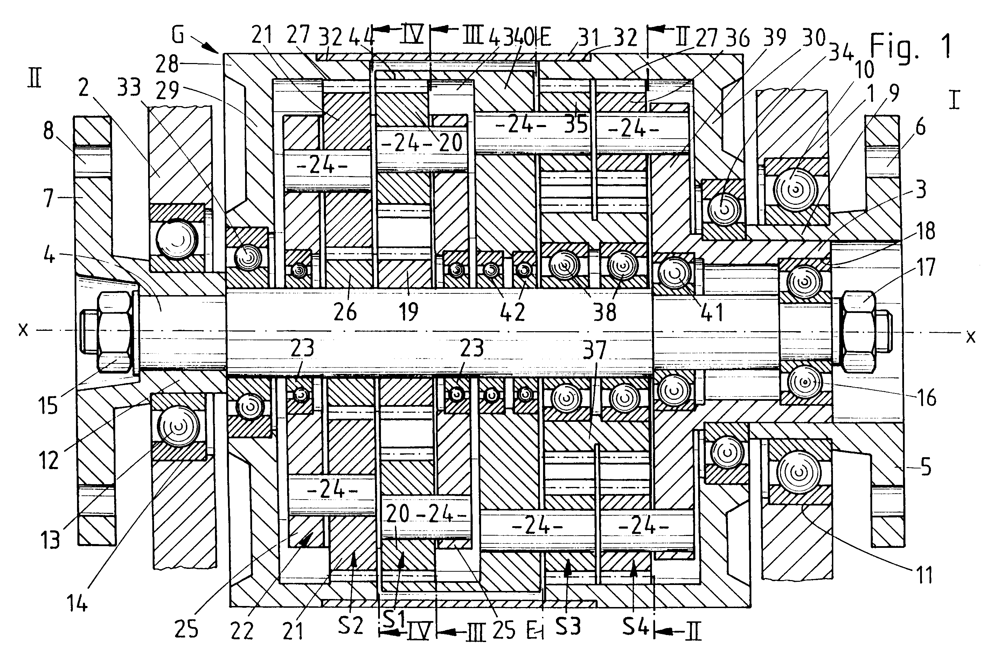

Unter Hinweis auf Fig. 1 liegt auf der rechten Seite die Antriebsseite I und auf der linken Seite die Abtriebsseite II.

Antriebsseitig bildet das Getriebe G eine ortsfest gelagerte Antriebswelle 3 aus. Abtriebsseitig erstreckt sich, ebenfalls in ortsfester Lagerung, eine Abtriebswelle 4. Zum motorseitigen Anschluß dient ein der Antriebswelle 3 zugeordneter Flansch 5. Dieser weist einen Kranz konzentrisch um die Längsmittelachse x-x angeordneter Löcher 6 auf. Diese dienen zum Durchtritt von Befestigungsschrauben für den motorseitigen Gegenflansch (nicht dargesellt).

In gleicher Weise geht vom freien Ende der Abtriebswelle 4 ein Flansch 7 aus mit entsprechend angeordneten Löchern 8 zum Ankuppeln eines Flansches des anzutreibenden Objekts.

Die Abtriebswelle 4 ist als Kernwelle gestaltet und reicht antriebsseitig bis in den Lagerungsbereich der als Hohlwelle gestalteten Antriebswelle 3. Die Zuordnung ist sogar axial überlappend.

Der Flansch 5 setzt sich getriebeseitig in einen Stutzen 9 fort. Letzterer sitzt in der Höhlung eines Kugellagers 10. Das Kugellager 10 ist in eine Lagerhöhlung 11 der Stirnwand 1 eingetrieben. Der zylindrisch gestaltete, flanschseitig gestufte Stutzen 9 steht mit der Antriebswelle 3 in schlupffreier Verbindung, beispielsweise durch eine nicht näher dargestellte Keilsicherung realisiert. Der Stutzen 9 übergreift die zylindrische Mantelwandung der Antriebswelle 3.

Lagerungstechnisch sind auf der Abtriebsseite II entsprechende Vorkehrungen getroffen. Auch dort setzt sich der Flansch 7 in einen getriebeseitig weisenden Stutzen 12 fort, welcher die Höhlung eines Kugellagers 13 durchsetzt, welches in einer Lagerhöhlung 14 der Stirnwand sitzt. In diesem Bereich ist die Abtriebswelle 4 -wie auch am anderen Ende- abgesetzt und der Stutzen 12 respektive der Flansch 7 am Wellenkörper drehfest verspannt. Die entsprechende Spannschraube trägt das Bezugszeichen 15. Das andere, antriebsseitige, von der Antriebswelle 3 umschriebene Ende steckt ebenfalls in der Höhlung eines Kugellagers 16. Letzteres erstreckt sich in der Ebene des Kugellagers 10. Die dortige Spannschraube ist mit 17 bezeichnet. Das Kugellager 16 sitzt in einer zum freien Ende hin offenen, abgesetzten Ausdrehung 18 der Antriebswelle 3.

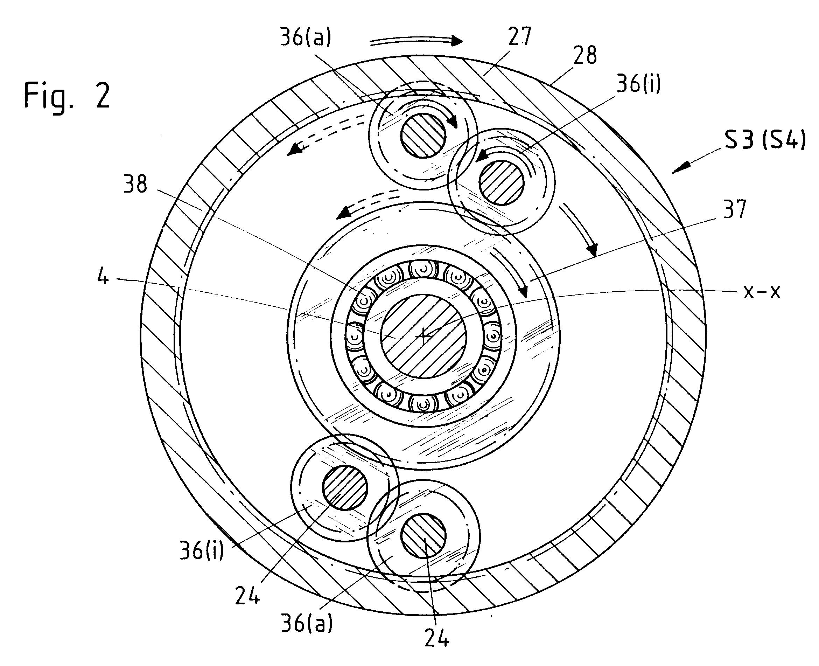

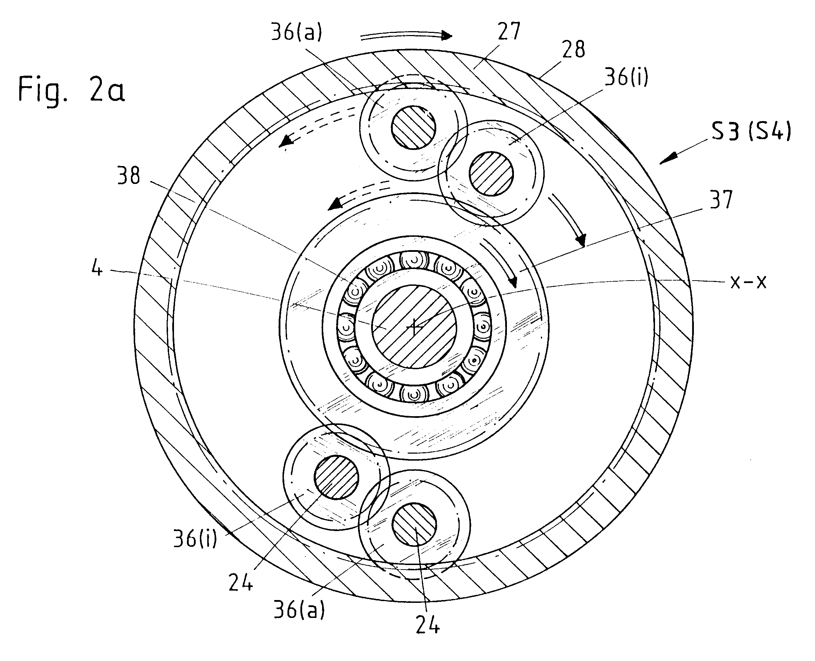

Das Eingerichte des Getriebes G besteht aus zwei abtriebsseitigen Abtriebsplanetensätzen S1 und S2; diese erstrecken sich linksseitig einer theoretischen Teilungsebene E-E (vergl. Fig. 2). Antriebsseitig dieser Ebene E-E liegen zwei Antriebsplanetensätze S3 und S4. Diese allesamt trägergelagerten Sätze S1 bis S4 sind axial aufgereiht. Dabei stehen die Sätze 3 und 4 in drehfreier Verbindung zum Wellenkörper der Abtriebswelle 4, während die beiden Abtriebsplanetensätze S1 und S2 mit dem genannten Wellenkörper in Drehmitnahme stehen.

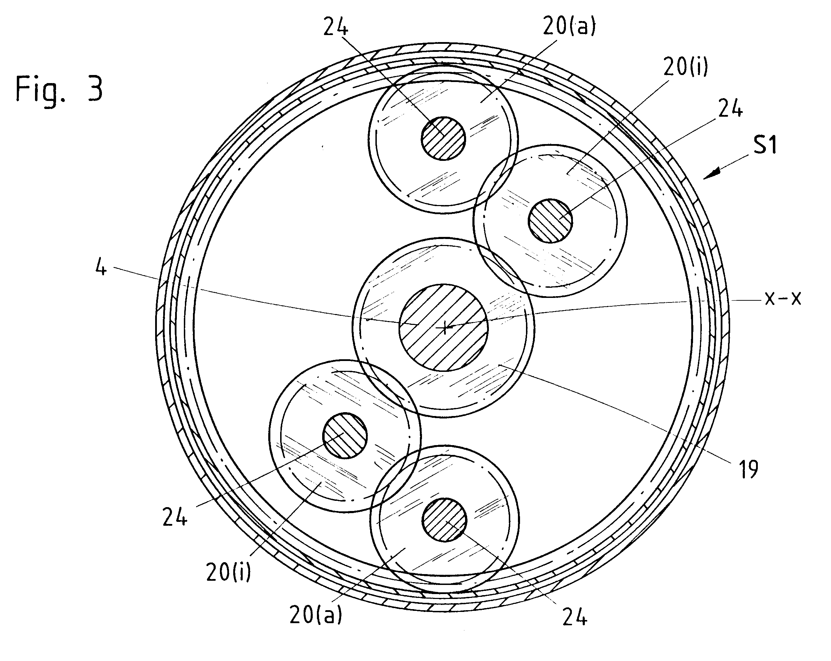

Wie dem Querschnitt gemäß Linie III-III (Fig. 3) entnehmbar, ist der in Verachsung mit der Welle stehende Teil dieses Abtriebsplanetensatzes S1 ein Sonnenrad 19. Letzteres kämmt mit Planetenrädern 20. Dort sind insgesamt vier Planetenräder 20 installiert, welche jedoch auf radial unterschiedlichen Kreisbahnen um die geometrische Achse x-x umlaufen. Die beiden auf der der Längsmittelmittelachse x-x näheren Kreisbahn umlaufenden Innenräder 20i kämmen einerseits mit dem Sonnenrad 19 und andererseits mit den auf der weiter außenliegenden Umlaufbahn kreisenden Außenrädern 20a. Sowohl die Außenräder 20a als auch die Innenräder 20i der paarig angeordneten Planetenräder 20 erstrecken sich in je einer Diamaetralen zueinander.

Der erste Satz S1 Planetenräder 20 ist gekoppelt mit einem zweiten Satz S2 Planetenrädern 21. Die entsprechende Kopplung ergibt sich aufgrund einer Unterbringung in einem gemeinsamen Käfig 22 als Planetenträger, welcher frei drehbar auf der Abtriebswelle 4 über zwei Kugellager 23 seine Lagerung findet. Gebildet ist der Käfig 22 von zwei axial beabstandeten Ringscheiben, welche peripher über raumparallel zur Längsmittelachse x-x verlaufende, Fenster für die Außenräder 20a belassende Brückenabschnitte fest verbunden sind.

Die Planetenräder 21 des Satzes S2 sitzen auf einer gemeinsamen Umlaufbahn, definiert durch Tragachsen 24. Auch die Tragachsen des ersten Satzes S1 sind mit 24 bezeichnet. Sie erstrecken sich, wie die anderen, in raumparalleler Lage zur Längsmittelachse x-x und gehen von den senkrecht zur besagten Achse liegenden Ringscheiben 25 in das Käfiginnere gerichtet aus.

Die Planetenräder 21, die ebenfalls mit einem wellenverachsten Sonnenrad 26 kämmen, liegen auf einer die Längsmittelachse x-x schneidenden Diametralen. Sonnenrad 26 und die beiden Planetenräder 21 sind etwa gleichen Durchmessers.

Die Planetenräder 21 des zweiten Satzes S2 kämmen außer mit dem zentral liegenden Sonnenrad 26 der Abtriebswelle 4 mit einem als Hohlrad 27 gestalteten Getriebemantel 28. Letzterer besteht aus zwei topfförmigen Stirnscheiben 29 und 30. Die Topfhöhlungen sind gegeneinander gerichtet. Eine axial orientierte Wandungsbrücke 31 verbindet die Topfwände der beiden Stirnscheiben 29,30 miteinander. Die Wandungsbrücke liegt in je einer Stufenausnehmung 32 der Stirnscheiben 29,30 ein derart, daß die Mantelfläche der Topfwände ebenengleich abschließen mit der der Wandungsbrücke 31. Dabei ist die Wandungsbrücke 31 von geringerer Materialstärke als die Topfwände. Hierdurch wird im Bereich zwischen den Topfwand-Stirnenden der beiden Stirnscheiben 29 und 30 ein radial auswärts orientierter Raumgewinn erzielt. Die beiden Stirnscheiben 29,30 bilden zugleich Nabenabschnitt zur Lagerung des Getriebemantels 28 einerseits auf der Antriebswelle 3 und andererseits auf der Abtriebswelle 4. Auch in diesen Nabenabschnitten sind Kugellager installiert. Das der Abtriebsseite II zugewandte Kugellager trägt das Bezugszeichen 33, während das in Gegenrichtung angeordnete Kugellager mit 34 bezeichnet ist. Letzteres sitzt auf einem stutzenfreien Abschnitt der Antriebswelle 3.

In der der Antriebswelle 3 zugewandten Hälfte des Getriebes befindet sich ein weiterer, dritter Satz S3 Planetenräder 35. Letzterer ist als Doppelsatz realisiert. Der dementsprechend vierte Satz S4 liegt näher zur Stirnwand 1 des Ständers oder Gehäuses des Getriebes G. Auch diese Planetenräder sind paarig vorgesehen, jeweils in diametraler Gegenüberlage zu einem zentralen Sonnenrad 37. Letzteres weist jedoch einen größeren Durchmesser auf als das des Satzes S1. Auch hier kämmen die Innenräder 36i, mit dem Sonnenrad 37, während die Außenräder 36a, wie die Planetenräder 21 des zweiten Satzes S2, mit dem vom Getriebemantel 28 gebildeten Hohlrad 27 kämmen (Fig. 2). Da der Satz S3 gleichen Aufbaues ist wie der Satz S4, ist diesbezüglich auf eine zusätzliche Schnittdarstellung verzichtet. Das Sonnenrad 37 für beide Sätze sitzt frei drehbar auf der der Antriebsseite I zugewandten Partie der Abtriebswelle 4. Das gemeinsame Sonnenrad 37 ruht auf paarig angeordneten Kugellagern 38.

Die Tragachsen der Planetenräder 35 des Doppelsatzes S4,S3 sind ebenfalls mit 24 bezeichnet. Ihr Träger ist einerseits ein der Antriebswelle 3 angeformter Flansch 39. Letzterer lagert die Planetenräder 36 des vierten Satzes S4. Getrennte Lagerung erfahren die Planetenräder 35 des dritten Satzes auf einer Topfscheibe 40. Topfscheibe 40 und Flansch 39 sind frei drehbar auf der Abtriebswelle 4 gelagert, wiederum unter Zwischenschaltung eines Kugellagers 41 im Bereich des Flansches 39 für diesen und paarig angeordneter Kugellager 42 im Bereich des der Topfscheibe 40 für diese. Auch die letztgenannten Tragachsen 24 erstrecken sich raumparallel zur Längsmittelachse x-x, also der geometrischen Achse des Getriebes.

Die sich parallel zum Flansch 39 erstreckende Topfscheibe 40 öffnet in Abtriebsrichtung. Der dortige Topfraum trägt das Bezugszeichen 43. Er besitzt eine Tiefe, die es erlaubt, den dortigen Abschnitt des Käfigs 22, sprich Ringscheibe 25, einschl. der Planetenräder 20 des ersten Satzes S1 unterzubringen. Überdies ist die Topfinnenwandung verzahnt. So daß auch hier ein Hohlrad 44 vorliegt. In dessen Verzahnung greift die der Planetenräder 20 ein.

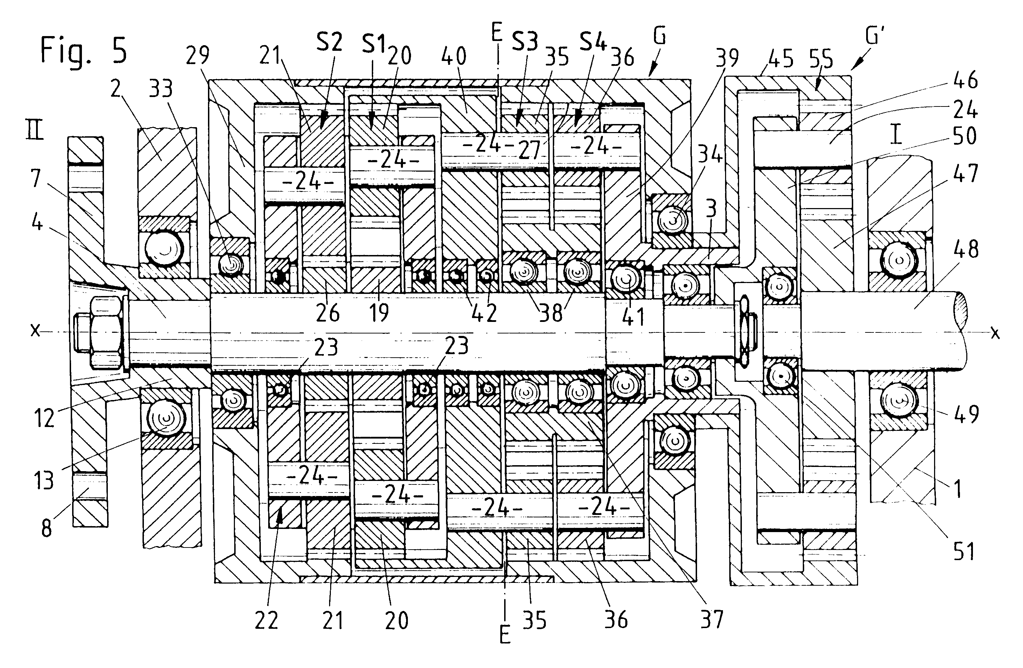

Damit das Getriebe G auch für Motoren mit sehr hohen Antriebsdrehzahlen, deren Drehzahl als Eingangsdrehzahl zu hoch ist, und bei verlangt hohen Abtriebsmomenten benutzt werden kann, ist dem Getriebe ein Vorschaltgetriebe G′ vorangesetzt (vergl. Fig. 5). Dieses Vorschaltgetriebe G′ besteht aus einem mit der Antriebswelle 3 verbundenen Hohlrad 45. Mit dessen Innenzahnkranz kämmen Planetenräder 46 eines fünften Satzes S5. Dessen Sonnenrad trägt das Bezugszeichen 47. Der Aufbau dieses Satzes entspricht dem in Fig. 2 dargestellten Satz S4 bzw. dem entsprechend gestalteten Sätzen S1 und S3. Das Sonnenrad 47 ist mit einer Vorwelle 48 verkeilt, über welche der Antrieb bewirkt wird. Gelagert ist die Vorwelle 48 auf einem Kugellager 49 der antriebsseitigen Stirnwand 1.

Ein Träger 50 der Planetenräder 46 steht in drehfester Verbindung mit dem antriebsseitigen Ende der Abtriebswelle 4. Im Träger 50 findet das abgesetzte freie Ende der Vorwelle 48 seine Lagerung über ein Kugellager 51. Die Tragachsen der Außen- und Innenräder ausgebildeten Planetenräder 46 sind hier ebenfalls mit 24 bezeichnet. Ansonsten sind die Bezugsziffern, soweit zum Verständnis erforderlich, sinngemäß übertragen.

### Funktionsbeschreibung:

Um den Aufbau und das Zusammenspiel der einzelnen Getriebeteile besser verstehen zu können, werden im folgenden die einzelnen Bauteile nach ihrer Funktion und Ihrer Aufgabe zum System hin erläutert. Grundsätzlich ist festzustellen und auch bereits angedeutet, daß das Getriebe G aus zwei Funktionshälften besteht. Dies sind von rechts nach links gesehen (Version ohne Vorschaltgetriebe G′) die Planetensätze S4, S3 von der Antriebsseite I und die Planetensätze S1 und S2 von der Abtriebsseite II.

### Funktion von Satz S3 und S4 (Antriebsseite I, vergl. Fig. 1 und 2):

Der Planetenträger mit den Planetenrädern 36 (Außenräder 36a, Innenräder 36i) erhält vom Antriebsflansch 5 her die zu übertragende Leistung, welcher Antriebsflansch somit den Planetenträger 39 in Bewegung setzt. Da ein Abrollen der Planetenräder 36 auf dem Sonnenrad 37 oder am Hohlrad 27 durch die Sperrfunktion der Sätze S1, S2 nicht möglich ist, stützen sich die Planetenräder 36 des Satzes S4 auf dem Sonnenrad 37 und dem Hohlrad 27 ab. Die Sperrfunktion wird vom Hohlrad 44 der Topfscheibe 40 des Satzes S1, der mit dem Planetenträger des Satzes S3 verbunden ist, über den Satz S3 auf den synchron laufenden Satz S4 übertragen. Der Satz S4 läuft als fester Block um, und zwar mit der Eingangsdrehzahl des Flansches 5, also des Antriebsflansches. Da die Planetenräder der Sätze S4 und S3 ein gemeinsames Sonnenrad 37 und Hohlrad 27 besitzen, läuft der Satz S3 synchron zum Satz S4.

Die antriebsseitigen ersten Beiden Sätze S4 und S3 laufen immer synchron, unabhängig davon, ob das Getriebe G als Wandler oder im direkten Gang im Einsatz ist. Das beim Abstützen der Planetenräder 36 auf dem Sonnenrad 37 und Hohlrad 27 im Planetensatz S4 entstehende Reaktionsmoment (siehe Fig. 2 und Fig. 2a) steht als Bremsmoment im Getriebemantel 28 zur Verfügung. Das auf das gemeinsame Sonnenrad 37 des Satzes S4 und S3 einwirkende Reaktionsmoment wird über die Planetenräder 35,36 der Sätze S3 und S4 auf das gemeinsame Hohlrad 27 des Satzes S4 und S3 übertragen. Somit ist das volle Reaktionsmoment am Hohlrad 27 des Satzes S4 und S3 vorhanden.

### Funktion der Sätze S1 und S2 (Abtriebsseite II):

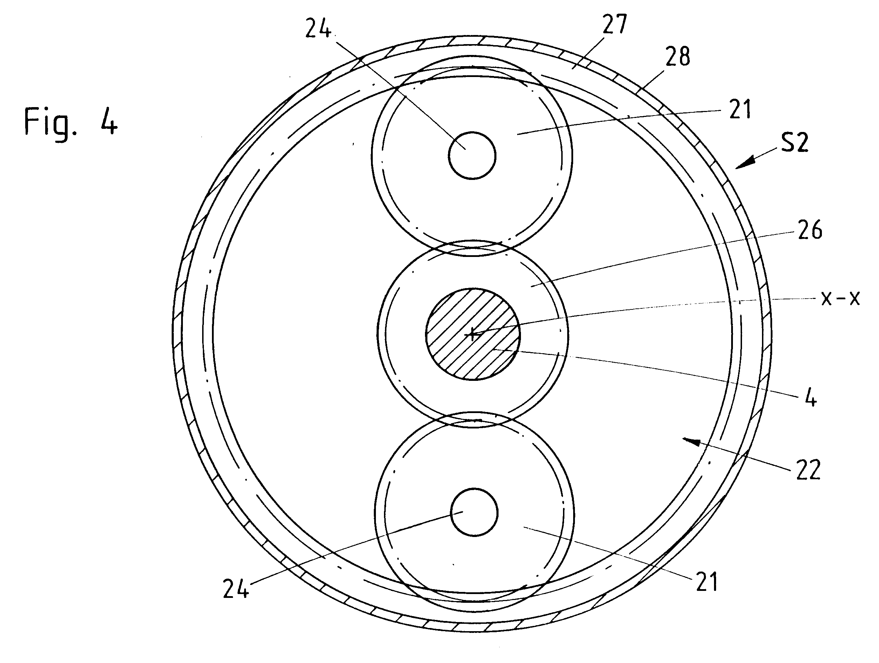

Die Sätze S1 und S2 auf der Abtriebsseite II setzen sich aus zwei verschiedenen Planetensätzen zusammen. Der Satz S1 hat den gleichen Aufbau wie die Sätze S4 und S3 (siehe Fig. 2 und 2a). Der Satz S2 dagegen hat einen anderen Aufbau als die Sätze S4, S3 und S1. Dieser in Kraftflußrichtung an letzter Stelle stehende Planetensatz S2 hat im Gegensatz zu den davorliegenden Sätzen nur zwei Planetenräder 21 (vergl. Fig. 4). Satz S1 und S2 haben neben dem gemeinsamen Sonnenrad (die Sonnenräder 19 und 26 können wie das Sonnenrand 37 einstückig sein) auf der Abtriebswelle 4 auch einen gemeinsamen Planetenträger, nämlich dem sogenannten Käfig 22. Daraus folgt, daß alle Planetenräder 20,21 der Sätze S1 und S2 immer die gleiche Drehzahl um die Abtriebswelle 4 ausführen, ohne Rücksicht auf die eigene Rotationsbewegung. Diese Drehzahl muß aber nicht der Drehzahl des angetriebenen Hohlrades 44 des Satzes S1 entsprechen, da sie sich frei nach der Drehzahl des gemeinsamen Sonnenrades 19/26 auf der Abtriebswelle 4 einstellt. Das Hohlrad 44 des Satzes S1 ist mit dem Planetenträger (Topfscheibe 40) des Satzes S3 verbunden; das Hohlrad 27 des Satzes S2 ist über den Getriebemantel 28 mit dem Hohlrad 27 der Sätze S4 und S3 durch Rückkopplung verbunden. Somit laufen die Hohlräder der Sätze S1 und S2 mit der Drehzahl der Planetenräder 36,35 der Sätze S4 und S3, die synchron als Block mit der Eingangsdrehzahl umlaufen, um. Solange das Ausgangsmoment nicht größer als das Eingangsmoment ist, laufen die Sätze S1 und S4 als Block um und damit das ganze Getriebe G. Eingangsdrehzahl und Ausgangsdrehzahl sind gleich, das Getriebe G arbeitet im direkten Gang. Ist das Ausgangsmoment größer als das Eingangsmoment, beginnt das Getriebe G als Wandler zu arbeiten. Dann wird das vorhandene Reaktionsmoment wirksam. Diese Funktion wird unter der Überschrift "Funktion des Getriebes bei zu hohem Abtriebsmoment" erläutert.

### Funktion des Getriebemantels:

Der Getriebemantel 28 bildet die Verbindung zwischen den Antriebs- und den Abtriebsplaneten.

Der Getriebemantel 28 hat im Getriebe G zwei Funktionen: Im direkten Gang hat er die Aufgabe, zusammen mit dem Getriebeblock das Moment zu übertragen. In der Arbeitsphase des Getriebes G hat er das Abstützmoment (Bremsmoment) von den Sätzen S4 und S3 auf den Satz S2 zu übertragen. Erst durch die Verbindung der Sätze S4, S3 und S2 kann das Getriebe als Abstützmoment von der Antriebsseite I auf die Abtriebsseite II übertragen werden.

Sobald das Getriebe G arbeitet, fängt der Getriebemantel 28 an, mit einer höheren Drehzahl als der Eingangsdrehzahl zu drehen. Der Getriebemantel 28 beschleunigt, je nach Höhe der Belastung auf der Abtriebsseite II, bis zu einer Drehzahl, bei der das Getriebe G wieder einen konstanten Betriebspunkt erreicht hat.

Der Getriebemantel 28 trägt die Hohlräder 27 (das Hohlrad 27 bildet zwei axial beabstandete Hohlrad-Abschnitte) für die Sätze S4, S3 und S2 und stellt eine ständige Verbindung zwischen dem An- und Abtrieb dar.

### Funktion des Getriebes bei zu hohem Abtriebsmoment:

Im folgenden wird das Zusammenspiel bei zu hohem Abtriebsmoment erläutert werden.

Eine Besonderheit des Getriebes G ist es, den Motor nicht mit einem höheren als von ihm abgegebenen Moment zu belasten.

Anhand der Fig. 1 soll die Funktion erklärt werden. Dazu betrachte man das Getriebe G und stelle sich vor, es läuft als Block um. D.h. es drehen sich keine Zahnräder relativ zueinander. Wird am Abtrieb ein höheres Moment benötigt, als vom Motor bereit gestellt wird. fängt das Getreibe G an zu arbeiten. Satz S1 beginnt sich zu drehen, da der Abtrieb seine Drehzahl vermindert. Über den gemeinsamen Planetenträger (Käfig 22) mit Satz S2 wird der Getriebemantel 28 beschleunigt und das Getriebe G in Funktion gesetzt.

Sobald ein Zahnrad anfängt sich zu drehen, müssen sich alle Zahnräder drehen. Sie arbeiten in einem Kreis, der sich gegenseitig beeinflußt.

Im direkten Gang stützen sich die Planetenräder 21 des Satzes S2 über den Getriebemantel 28 am Satz S4 plus S3 ab. Liegt das verlangte Abtriebsmoment höher, als das Abstützmoment gegen die Sätze S4 plus S3, herrscht kein Gleichgewicht mehr zwischen den Momenten an der Abtriebswelle 4 und am Getriebemantel 28. Die Abtriebswelle 4 kann ihre Drehzahl im Vergleich zur Eingangsdrehzahl vermindern.

Die Abtriebswelle 4 wird langsamer und die Planetenräder 20 des Satzes S1 beginnen sich abzuwälzen. Sie werden zwischen dem mit der Eingangsdrehzahl konstant umlaufenden Hohlrad 44 von Satz S1 und dem Sonnenrad 19/26 der Abtriebswelle 4 gezwungen, sich in Laufrichtung zu bewegen. Der gemeinsame Planetenträger, auf dem die Planeten montiert sind, läuft schneller als das Hohlrad 44 des Satzes S1 um und veranlaßt, daß die Planetenräder 21 des Satzes S2 sich auf der Abtriebswelle 3 abwälzen. Der Getriebemantel 28 beschleunigt durch die Planetenräder 21 des Satzes S2 auf eine Drehzahl, die sich aus der Drehzahl der Planetenräder 21 und den abgewälzten Zähnen des Satzes S2 auf der Abtriebswelle 4, ergibt, wobei das Abwälzen der Planetenräder 21 durch die Umdrehungszahl des Käfigs 22 bestimmt ist, der wiederum mit den in dieser Phase voreilenden Planetenrädern 21 gekuppelt ist.

Der Getriebemantel 28 hat sich auf eine höhere Drehzahl beschleunigt und überträgt diese auf die Sätze S4 und S3. Daraus folgt, daß das Sonnenrad 37 der Sätze S4 und S3 über die Planetenräder 36,35 der Sätze S4 und S3 ebenfalls anfängt, sich zu bewegen. Die Sätze S4 und S3 müssen sich synchron bewegen, da sie beide das gleiche Sonnenrad 37 und Hohlrad 27 haben. Das hat zur Folge, daß sich das Hohlrad 44 des Satzes S1, angetrieben durch den Planetenträger (Topfscheibe 40) des Satzes S3, stets mit der Eingangsdrehzahl bewegt.

Der Satz S1 muß sich bewegen, da die Abtriebswelle 3 langsamer dreht als das Hohlrad 44. Die Drehzahldifferenz zwischen dem Hohlrad 44 und dem Sonnenrad 19 des Satzes S1 ergibt sich aus dem Belastungsgrad am Abtrieb, der eine Drehzahlabnahme zur Folge hat. Der Planetenträger (Käfig 22) des Satzes S1 muß sich bewegen, um die abgewälzte Zähnezahldifferenz auszugleichen. Er wird in Drehrichtung des Hohlrades 44 vorgeschoben.

Von den Drehrichtungen und den unterschiedlichen Drehzahlen her hat sich hier der Bewegungskreislauf geschlossen. Der nächste Schritt liegt nun in den Momenten und ihrer Verarbeitung im Getriebe.

Der Getriebemantel 28 muß abgebremst werden, damit die Planetenräder 21 des Satzes S2 sich gegen ihn abstützen können. Ohne Berücksichtigung des Übersetzungsverhältnisses kann die Abtriebswelle 4 nur ein Moment in der Höhe des am Getriebemantel 28 aufgebrachten Gegenmomentes abgeben. Dies ist dem Verteilgetriebe (Differential) bei einem Kraftfahrzeug ähnlich.

Die Antriebswelle 3 bringt über den Planetenträger (Flansch 39) und die Planetenräder 36 des Satzes S4 ein Moment mit einem bestimmten Betrag ein. Dieses Moment wird, solange kein zu hohes Abtriebsmoment verlangt wird, ohne eine Bewegung der Planetenräder im Getriebe G weitergeleitet. Die Planetensätze sind so gegeneinander geschaltet, daß sie sich, in dieser Funktionsstellung, nicht relativ zur Getriebebewegung drehen können.

Der Getriebemantel 28 und das Sonnenrad 37 des Satzes S4 werden von den Sätzen S3, S1, S2 gehalten. Wäre das nicht der Fall, würden beide, von dem Planetenträger und seinen Planeten von Satz S4 angetrieben, umlaufen. Der Motor würde dann im Leerlauf drehen. Dies wird durch die Verbindung der Sätze S3 und S2 verhindert. Die Sätze S3 und S2 sind auf zwei Wegen miteinander verbunden:
Über den Getriebemantel 28 in Verbindung mit Satz S1,
über das Sonnenrad 19/26 der Sätze S1,S2, das Hohlrad 44 des Satzes S1, den Planetenträger (Topfscheibe 40) des Satzes S3 und die Planetenräder 35 des Satzes S3.

Beginnt nun das Getriebe G, wie oben beschrieben, zu arbeiten, müssen die Planetenräder 21 des Satzes S2 den Getriebemantel 28, mit den Hohlrädern 27 der Sätze S4, S3, und S2 auf eine höheren Drehzahl beschleunigen und dabei das im Planetensatz S4 erzeugte Abstützmoment (Bremsmoment) überwinden.

Daraus folgt, daß die Planetenräder 21 des Satzes S2 über den Getriebemantel 28 einem Gegenmoment auf der Antriebsseite I entgegenarbeiten müssen. Die Planetenräder 21 des Satzes S2 geben, über das Sonnenrad 26 auf der Abtriebswelle 4 ein Moment in der Höhe des Gegenmoments, das in Satz S4 entsteht, ab.

Bei abnehmender Abtriebsdrehzahl gibt das Getriebe G ein bis zu einem Maximalwert anwachsendes Moment ab.

Der angetriebene Planetenträger muß das Sonnenrad 37 und das Hohlrad 27 des Satzes S4 und die damit verbundenen Sätze S3 und S1 antreiben und entwickelt dabei ein Gegenmoment, das sich am Sonnenrad 37 der Sätze S4 und S3 abstützt.

Dieser Effekt in Verbindung mit der beschriebenen Planetensatzkombination wird als Bremsmoment für den Getriebemantel 28 ausgenutzt.

### Erklärung der Fig. 2 und 2a:

Fig. 2 zeigt die Drehrichtungen und Reaktionen des Satzes S4 in der Arbeitsphase.

Dreht der Getriebemantel 28 mit einer höheren Drehzahl als die angetriebenen Planetenräder, entstehen die eingezeichneten Drehrichtungen, wobei die Drehzahl des Sonnenrades 37 ebenfalls ansteigt.

Fig. 2a gibt die Drehrichtungen und Reaktionen des Satzes S4 im direkten Gang an.

Die Vollinien der Pfeile zeigen die Drehrichtung an, mit der sich die Getriebeteile bewegen. Die Strichlinien der Pfeile zeigen die Reaktionsrichtung der Planetenräder 36 (Außenräder 36a, Innenräder 36i,) am Sonnenrad 37 und Hohlrad 27.

Das Zähnezahlverhältnis zwischen dem Sonnenrad 19 bzw. 26 und dem Hohlrad 44 bzw. 27 hat keinen Einfluß auf das Übersetzungsverhalten des Getriebes G. Es beeinflußt den Wirkungsgrad. Das Getriebe G arbeitet optimal, wenn das Sonnenrad 19/26 def Sätze S1 und S2 ein Drittel der Zähnezahl der Hohlräder 44 bzw. 27 besitzt. Dies gilt nur bei Vernachlässigung von Reibungsverlusten, Trägheitsmomenten und Schwungmassen.

Was nun das Vorschaltgetriebe G′ betrifft, so tritt dieses nur in Funktion, wenn das Getriebe G anfängt zu arbeiten. Im direkten Gang verschwindet die Untersetzung des Vorschaltgetriebes G′ ganz. Das Vorschaltgetriebe steht mit seinem Planetenträger 50 direkt mit dem Abtrieb in Verbindung. Nur wenn der Abtrieb seine Drehzahl vermindert, bewegt sich der Planetenträger 50 und somit tritt mit zunehmender Abtriebsdrehzahl eine immer größere Untersetzung ein.

## Patentansprüche

1. Drehmoment-Übertragungsgetriebe mit einer Antriebswelle (3), die über ein erstes Hohlrad (44) mittels zwischengeschalteten ersten Satzes (S1) Planetenräder (20) das Antriebsmoment auf ein mit der Abtriebswelle (4) in Drehmitnahme stehendes Sonnenrad (19) überträgt, dadurch gekennzeichnet, daß mit dem ersten Satz (S1) Planetenrädern (20) ein zweiter Satz (S2) Planetenräder (21) gekoppelt ist, der einerseits mit einem mit der Abtriebswelle (4) in Drehmitnahme stehenden Sonnenrad (26) und andererseits mit einem als zweites Hohlrad (27) gestalteten Getriebemantel (28) kämmt, daß das zweite Hohlrad (27) mittels auf der Antriebswelle (3) gelagerter Planetenräder (36) eines vierten Satzes (S4) mit einem frei auf der Abtriebswelle (4) gelagerten Sonnenrad (37) in mittelbarem Zahneingriff steht, und daß das erste Hohlrad (44) von einer Topfscheibe (40) ausgebildet wird, welche die Planetenräder (35) eines dritten mit dem vierten Satz (S3) synchronisierten Satzes (S4) lagert, welche ebenfalls in mittelbarem Zahneingriff zum Sonnenrad (37) stehen.

2. Drehmoment-Übertragungsgetriebe nach Anspruch 1, dadurch gekennzeichnet, daß der erste Satz (S1) Planetenräder (20) aus mit einem Hohlrad (44) kämmenden Außenrädern (20a) sowie dem Sonnerad (19) kämmenden Zwischenrädern (20i) besteht.

3. Drehmoment-Übertragungsgetriebe nach einem oder mehreren der vorhergehenden Ansprüche, dadurch gekennzeichnet, daß die Planetenräder (21) des zweiten Satzes (S2) unmittelbar mit dem Sonnenrad (26) der Abtriebswelle (4) und dem Getriebemantel (28) kämmen.

4. Drehmoment-Übertragungsgetriebe nach einem oder mehreren der vorhergehenden Ansprüche, dadurch gekennzeichnet, daß der dritte Satz (S3) Planetenräder (35) aus mit dem Hohlrad (37) kämmenden Außenrädern sowie dem Sonnenrad (37) kämmenden Innenrädern besteht.

5. Drehmoment-Übertragungsgetriebe nach einem oder mehreren der vorhergehenden Ansprüche, dadurch gekennzeichnet, daß der dritte Satz (S3) ein Doppelsatz (S3,S4) ist.

6. Drehmoment-Übertragungsgetriebe nach einem oder mehreren der vorhergehenden Ansprüche, dadurch gekennzeichnet, daß der Antriebsseite (I) des Getriebes (G) ein Vorschaltgetriebe (G') zugeordnet ist.

## Claims

1. Torque transmission gearbox with an input drive shaft (3) which via a first ring gear (44) by means of an intermediate first assembly (S1) of planet wheels (20) transmits the input driving torque to a sun wheel (19) in rotational entrainment with the output drive shaft (4), characterised in that coupled to the first assembly (S1) of planet wheels (20) is a second assembly (S2) of planet wheels (21) which meshes on the one hand with a sun wheel (26) in rotational entrainment with the output drive shaft (4) and on the other hand with a gearbox casing (28) which is designed as a second ring gear (27), in that the second ring gear (27) by means of planet wheels (36) of a fourth assembly (S4) mounted on the input drive shaft (3) meshes indirectly with a sun wheel (37) counted freely on the output drive shaft (4), and in that the first ring gear (44) is formed by a cup plate (40) which supports the planet wheels (35) of a third assembly (S4) synchronised with the fourth assembly (S3), which also mesh indirectly with the sun wheel (37).

2. Torque transmission gearbox according to claim 1, characterised in that the first assembly (S1) of planet wheels (20) consists of external gears (20a) meshing with a ring gear (44) and also intermediate gears (20i) meshing with the sun wheel (19).

3. Torque transmission gearbox according to one or more of the preceding claims, characterised in that the planet wheels (21) of the second assembly (S2) mesh directly with the sun wheel (26) of the output drive shaft (4) and the gearbox casing (28).

4. Torque transmission gearbox according to one or more of the preceding claims, characterised in that the third assembly (S3) of planet wheels (35) consists of external gears meshing with the ring gear (37) and also internal gears meshing with the sun wheel (37).

5. Torque transmission gearbox according to one or more of the preceding claims, characterised in that the third assembly (S3) is a double assembly (S3, S4).

6. Torque transmission gearbox according to one or more of the preceding claims, characterised in that an auxiliary gearbox (G') is associated with the input side (I) of the gearbox (G).

## Revendications

1. Mécanisme de transmission de couple comprenant un arbre d'entrée (3), qui par l'intermédiaire d'une première couronne à denture intérieure (44) transmet, au moyen d'un premier train intermédiaire (S1) de pignons d'engrenage satellites (20), le couple moteur à une roue d'engrenage planétaire (19) accouplée en rotation à l'arbre de sortie (4), caractérisé en ce qu'au premier train (S1) de pignons d'engrenage satellites (20) est accouplé un deuxième train (S2) de pignons d'engrenage satellites (21), lequel engrène d'une part avec une roue d'engrenage planétaire (26) solidaire en rotation de l'arbre de sortie (4) et d'autre part avec un carter de mécanisme (28) formant une deuxième couronne à denture intérieure (27), en ce que la deuxième couronne à denture intérieure (27) est indirectement en prise avec une roue d'engrenage planétaire (37) montée folle à rotation sur l'arbre d'entrée (3) par l'intermédiaire des pignons d'engrenage satellites (36) d'un quatrième train (S4) tourillonnés sur l'arbre d'entrée (3), et en ce que la première couronne à denture intérieure (44) est réalisée sous la forme d'un boisseau (40) qui porte à rotation les pignons d'engrenage satellites (35) d'un troisième train (S3), synchronisé avec le quatrième train (S4), lequel est également en prise indirecte avec la roue d'engrenage planétaire (37).

2. Mécanisme de transmission de couple selon la revendication 1, caractérisé en ce que le premier train (S1) de pignons d'engrenage satellites (20) consiste en pignons d'engrenage extérieurs (20a) engrènant avec une couronne à denture intérieure (44) ainsi qu'en pignons d'engrenage intermédiaires (20i) engrènant avec la roue d'engrenage planétaire (19).

3. Mécanisme de transmission de couple selon une ou plusieurs des revendications précédentes, caractérisé en ce que les pignons d'engrenage satellites (21) du deuxième train (S2) engrènent directement avec la roue d'engrenage planétaire (26) de l'arbre de sortie (4) et le carter de mécanisme (28).

4. Mécanisme de transmission de couple selon une ou plusieurs des revendications précédentes, caractérisé en ce que le troisième train (S3) de pignons d'engrenage satellites (35) consiste en pignons d'engrenage extérieurs engrènant avec la couronne à denture intérieure (37) ainsi qu'en pignons d'engrenage intérieurs engrènant avec la roue d'engrenage planétaire (37).

5. Mécanisme de transmission de couple selon une ou plusieurs des revendications précédentes, caractérisé en ce que le troisième train (S3) est un train double (S3, S4).

6. Mécanisme de transmission de couple selon une ou plusieurs des revendications précédentes, caractérisé en ce que du côté entraînement (I) du mécanisme (G) est disposé un train d' engrenages d'entrée (G').
